Europäisches Patentamt

European Patent Office

Office européen des brevets

(19)

(11) **EP 0 893 927 A1**

(12) **DEMANDE DE BREVET EUROPEEN**

(43) Date de publication:
**27.01.1999 Bulletin 1999/04**

(51) Int Cl.$^6$: **H04N 17/02**

(21) Numéro de dépôt: **98401557.8**

(22) Date de dépôt: **24.06.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **22.07.1997 FR 9709297**

(71) Demandeurs:
• **FRANCE TELECOM**
  **75015 Paris (FR)**

• **TELEDIFFUSION DE FRANCE**
  **75015 Paris (FR)**

(72) Inventeur: **Pefferkorn, Stéphane**
**35000 Rennes (FR)**

(74) Mandataire: **Keib, Gérard et al**
**NOVAMARK TECHNOLOGIES**
**Anciennement Brevets Rodhain & Porte**
**122, Rue Edouard Vaillant**
**92593 Levallois Perret Cedex (FR)**

(54) **Procédé d'estimation de la perception locale des erreurs de quantification chromatiques dans une image fixe**

(57)    La présente invention concerne un procédé d'estimation de la perception locale des erreurs de quantification chromatiques dans une image codée fixe, à partir d'une image de référence (1) non codée et d'une image de test (2) codée, une fenêtre de points (II) centrée sur chaque point (ij) de l'image de référence (1) et de l'image de test (2) étant définie, qui comporte les étapes suivantes :

.    transformation des signaux numériques dudit point (ij) et calcul de la valeur moyenne, de la composante de chroma ($C^*_{moyi,j}$) et la composante de teinte

($h_{moyi,j}$) sur ladite fenêtre (II),
.    variations moyennes de chroma ($\Delta C^*_{moyi,j}$) et de teinte ($\Delta H^*_{moyi,j}$) sur la fenêtre courante (II),
.    différence de couleur filtrée perçue entre la couleur de chaque point (i,j) et la couleur moyenne sur la fenêtre courante (II) de l'image de référence ($\Delta E^{\sim *ref}_{i,j}$) et de l'image de test ($\Delta E^{\sim *test}_{i,j}$),
.    différence de couleur ($\Delta E^{*test/ref}_{moyi,j}$), et
.    estimation de la perception locale ($ERR^{ref/test}_{i,j}$) de l'erreur de quantification chromatique de l'image fixe.

FIG_1

**Description**

*[Domaine de l'invention]*

La présente invention concerne un procédé d'estimation de la perception locale des erreurs de quantification chromatiques dans une image fixe, une fenêtre de points centrée sur chaque point de l'image de référence et de l'image de test étant définie.

*[Art antérieur et problèmes techniques]*

La conversion d'un signal analogique représentant une image couleur en un signal numérique correspondant ou la prise d'image directement en numérique, est réalisé par un échantillonnage du signal continu reçu en un certain nombre fini d'instant discrets, et par une quantification des valeurs possibles de ce signal à chacun de ces instants. La quantification, c'est à dire la restriction d'un signal continu en nombre fini de valeurs, ne permet pas d'exprimer toutes les nuances subtiles de l'image originale (ou image source) lors de la restitution sur un écran de cette image. Dans certains traitements de l'image, l'image numérisée est ensuite compressée, et aux pertes de qualité de l'image évoquées au dessus viennent s'ajouter les pertes dues à cette compression. C'est le cas notamment pour les images traitées en 4 :2 :2 dans le domaine MPEG-2.

La plupart des algorithmes de compression d'images traite l'information colorée en considérant un canal achromatique qui contient l'information « noir et blanc » de la scène et deux canaux chromatiques qui contiennent les informations de teinte et de saturation comme le fait le système visuel humain. La résolution spatiale de ces canaux étant limitée, les informations redondantes sont alors supprimées. Or, la perception des erreurs de quantification est généralement estimée pour l'information achromatique et rarement pour l'information chromatique.

En particulier, la demande de brevet français No 97 00096 déposée le 8 janvier 1997 au nom de Télédiffusion de France et de France Telecom, propose un procédé d'estimation de la perception locale des distorsions de quantification dans une image fixe donnant d'excellents résultats. Assimilant la perception par l'oeil humain de la quantification à la perception de distorsion locale de contraste lumineux, ce procédé permet une mesure plus fine de la qualité d'image et une meilleure sélection du pas de quantification à choisir, en prenant en compte les spécificités de traitement du système visuel humain. Cependant, ce procédé repose sur le traitement achromatique de la luminance et ne prend pas en compte l'information chromatique.

Lorsque la perception des erreurs de quantification est estimée pour l'information chromatique, il s'agit principalement d'une analyse statistique du contenu de l'image quantifiée qui ne tient pas compte des caractéristiques visuelles du traitement de l'information chromatique ou d'une extrapolation des résultats connus sur le traitement de l'information achromatique aux composantes chromatiques. De même, l'opération qui consiste à faire une simple mesure de différence entre le signal « image de référence » et le signal « image test » (image codée) ne peut fournir qu'une estimation erronée de la distorsion perçue.

Partant du principe que la perception des erreurs de quantification chromatiques peut être assimilée à une perception locale des différences de couleurs, il est nécessaire, afin de déterminer la perception des erreurs de quantification chromatiques, de prendre en compte les caractéristiques visuelles du traitement de l'information chromatique et de résoudre les problèmes liés au fonctionnement du système visuel pour pouvoir définir une métrique de perception des différences de couleurs en tenant compte du contenu intrinsèque de la scène présentée comme :

- . la représentation de la couleur dans un espace perceptif à partir de la spécification colorimétrique des informations chromatiques et lumineuse,
- . la définition d'un référentiel de « couleur moyenne» sur une zone localisée,
- . la formulation de la perception des différences de couleur au delà du seuil de perception, et
- . l'évolution de cette formulation en fonction du contenu fréquenciel de la scène.

Il existe donc un réel besoin d'un procédé d'estimation de la perception des erreurs de quantification chromatique qui prendrait en compte ces paramètres et qui permettrait de choisir un pas de quantification du système de codage le mieux adapté à la perception visuelle.

*[Résumé de l'invention]*

La présente invention permet de résoudre ces problèmes et propose un procédé d'estimation de la perception locale des erreurs de quantification chromatiques dans une image fixe du type évoqué plus haut, qui est caractérisé en ce qu'il comporte les cinq étapes suivantes :

[étape 1 :]

. transformation des signaux numériques dudit point (i,j) en au moins une composante de chroma $C^*_{i,j}$ et une composante de teinte $h_{i,j}$ d'un espace chromatique $(L^*C^*h)$, et calcul de la valeur moyenne pour chaque point (i,j) de l'image de référence et de l'image de test, de la composante de chroma $C^*_{moyi,j}$ et la composante de teinte $h_{moyi,j}$ sur ladite fenêtre correspondant à un voisinage dudit point (i,j),

[étape 2 :]

. calcul des différences de variation $[\Delta C^*_{ij}]_{k,l}$ et $[\Delta H^*_{i,j}]_{k,l}$ entre les valeurs moyennes de chroma et de teinte dudit point (i,j), et les valeurs moyennes de chroma et de teinte sur la fenêtre centrée sur ledit point (i,j) calculée lors de l'étape précédente, dont la somme sur les points (k,l) de la fenêtre donne les

[étape 3 :]

. application aux variations de chroma $[\Delta C^*_{ij}]_{k,l}$ et de teinte $[\Delta H^*_{ij}]_{k,l}$ de facteurs paramétriques $[K_{Ci,j}]_k$, $[K_{Ci,j}]_l$, $[K_{Hi,j}]_k$ et $[K_{Hi,j}]_l$ correspondant aux coefficients de deux filtres numériques vertical et horizontal, et somme quadratique de ces valeurs pour le calcul de la différence de couleur perçue entre la couleur de chaque point (i,j) et la couleur moyenne sur la fenêtre courante de l'image de référence $\Delta E^{\sim *ref}_{i,j}$ et de l'image de test $\Delta E^{\sim *test}_{i,j}$,

[étape 4 :]

. calcul sur les fenêtres courantes de l'image de référence et de l'image de test, de la différence de couleur $\Delta E^{*test/ref}_{moyi,j}$ correspondant à la somme quadratique de la variation de chroma $\Delta C^{*ref/test}_{moyi,j}$ et de teinte $\Delta H^{*ref/test}_{moyi,j}$ des couleurs moyennes, et

[étape 5 :]

. calcul de la perception locale $ERR^{ref/test}_{i,j}$ de l'erreur de quantification chromatique de l'image fixe, par la différence entre les variations de couleurs filtrées du point (i,j) de l'image de référence $\Delta E^{*ref}_{i,j}$ et du point (i, j) correspondant de l'image de test $\Delta E^{\sim *test}_{ij}$, ajoutée à la différence de couleur perçue entre les couleurs moyennes $\Delta E^{*ref/test}_{moyi,j}$ (pouvant être pondérée par un facteur $k$, $0 \leq k \leq 1$) calculée lors de l'étape précédente.

Selon une caractéristique importante de la présente invention, l'étape 1 de transformation des signaux numériques dudit point (ij) comporte les transformations suivantes :

. transformation des signaux numériques achromatique $Y_{Qi,j}$ et chromatiques $Cr_{Qi,j}$ et $Cb_{Qi,j}$ dudit point (i,j) en données analogiques $Y_{i,j}$, $Dr_{i,j}$ et $Db_{i,j}$, telles que :

$Y_{i,j} = (Y_{Qi,j}- 16)/219$,
$Dr_{i,j} = (Cr_{Qi,j}- 128)/160$, et
$Db_{i,j} = (Cb_{Qi,j}- 128)/126$,

. transformation des signaux analogiques $Y_{i,j}$, $Dr_{i,j}$ et $Db_{i,j}$ en composantes Rouge $R_{i,j}$, Vert $V_{i,j}$ et Bleue $B_{i,j}$, telles que :

$$\begin{pmatrix} R_{i,j} \\ V_{i,j} \\ B_{i,j} \end{pmatrix} = \begin{pmatrix} 1 & 1 & 0 \\ 1 & -0.509 & -0.194 \\ 1 & 0 & 1 \end{pmatrix} \bullet \begin{pmatrix} Y_{i,j} \\ Dr_{i,j} \\ Db_{i,j} \end{pmatrix}$$

. transformation des composantes $R_{i,j}$, $V_{i,j}$ et $B_{i,j}$ en composantes corrigée gamma $R_{gami,j}$, $V_{gami,j}$ et $B_{gami,j}$ telles que :

$$R_{gami,j} = (Gain_R.R_{i,j} + Offset_R)^\gamma,$$
$$V_{gami,j} = (Gain_V.V_{i,j} + Offset_V)^\gamma,$$
$$B_{gami,j} = (Gain_B.B_{i,j} + Offset_B)^\gamma,$$

où, $Gain_R$, $Gain_V$ et $Gain_B$ étant les gains déterminant l'amplitude du signal attaquant le tube, $Offset_R$, $Offset_V$ et $Offset_B$ les valeurs de seuil correspondantes, et $\gamma$ compris dans une gamme de 2 à 3,

. transformation des composantes $R_{gami,j}$, $V_{gami,j}$ et $B_{gami,j}$ en composantes colorimétriques $X_{i,j}$, $Y_{i,j}$ et $Z_{i,j}$ telles que :

$$\begin{pmatrix} X_{i,j} \\ Y_{i,j} \\ Z_{i,j} \end{pmatrix} = \begin{pmatrix} 0.4306 & 0.3415 & 0.1784 \\ 0.2220 & 0.7067 & 0.0713 \\ 0.0202 & 0.1296 & 0.9393 \end{pmatrix} \bullet \begin{pmatrix} R_{gam_{i,j}} \\ V_{gam_{i,j}} \\ B_{gam_{i,j}} \end{pmatrix} \bullet Y_{max}$$

. transformation non linéaire des composantes colorimétriques $X_{i,j}$, $Y_{i,j}$ et $Z_{i,j}$ en composante de clarté psychométrique $L^*$, et composantes de teinte $a^*$ et $b^*$, telles que :

$$L^*{}_{i,j} = f\left(\frac{Y_{i,j}}{Yn}\right)$$

$$a^*{}_{i,j} = \frac{500}{116}\cdot\left[f\left(\frac{X_{i,j}}{Xn}\right) - f\left(\frac{Y_{i,j}}{Yn}\right)\right]$$

$$b^*{}_{i,j} = \frac{200}{116}\cdot\left[f\left(\frac{Y_{i,j}}{Yn}\right) - f\left(\frac{Z_{i,j}}{Zn}\right)\right]$$

où f est définie à partir des valeurs des rapports des composantes colorimétriques Q suivantes :

$$f(Q) = 903,3.Q \qquad \text{si } Q < 0,008856, \text{ et}$$

$$f(Q) = 116.Q^{1/3} - 16 \qquad \text{si } Q \geq 0,008856.$$

. et transformation des composantes psychométrique $L^*$, et des composantes de teinte $a^*$ et $b^*$ en composantes cylindriques de clarté psychométrique $L^*$, de chroma $C^*$ et de teinte $h$, telles que :

$$C^*{}_{i,j} = [(a^*{}_{i,j})^2 + (b^*{}_{i,j})^2]^{1/2},$$

. si $b^*{}_{i,j} \neq 0$, $\qquad h_{i,j} = 90.(2 - sgn(b^*{}_{i,j})) - arctg(a^*{}_{i,j}/b^*{}_{i,j})$

. si $b^*{}_{i,j} = 0$ et $a^*{}_{i,j} \neq 0$, $\qquad h_{i,j} = 90.(1 - sgn(a^*{}_{i,j}))$, et

. si $b^*{}_{i,j} = 0$ et $a^*{}_{i,j} = 0$, $\qquad h_{i,j}$ n'est pas défini.

où $sgn(x) = 1$ si $x \geq 0$ et $sgn(x) = -1$ si $x < 0$.

De préférence, dans l'étape 2, la différence de teinte $(\Delta H^*{}_{i,j})_{k,l}$ est obtenue par l'équation suivante :

$$(\Delta H^{*}{}_{i,j})_{k,l} = A_{i_{+}k_{j+2l}} / (B_{i_{+}k_{j+2l}})^{1/2} ,$$

avec :

$$A_{i_{+}k,j_{+}2l} = a^{*}{}_{i_{+}k,j_{+}2l} \cdot b^{*}{}_{moyi,j} - b^{*}{}_{i_{+}k,j_{+}2l} \cdot a^{*}{}_{moyi,j} ,$$

$$B_{i_{+}k,j_{+}2l} = \tfrac{1}{2}.(C^{*}{}_{i_{+}k,j_{+}2l} \cdot C^{*}{}_{moyi,j} + a^{*}{}_{i_{+}k,j_{+}2l} \cdot a^{*}{}_{moyi,j} + b^{*}{}_{i_{+}k,j_{+}2l} \cdot b^{*}{}_{moyi,j}).$$

Selon une autre caractéristique importante de la présente invention, dans l'étape 3, les différences de chroma $(\Delta C^{*}{}_{i,j})_{k,l}$ et de teinte $(\Delta H^{*}{}_{i,j})_{k,l}$ sont pondérées point à point par des fonctions de pondérations $(S_{Ci,j})_{k,l}$ et $(S_{Hi,j})_{k,l}$ permettant d'uniformiser dans tout l'espace CIELAB, respectivement les variations relatives de chroma et de teinte perçue, pour le calcul de la différence de couleur perçue $\Delta E^{\sim *}{}_{i,j}$.

Selon une autre caractéristique importante de la présente invention, dans l'étape 4, les valeurs moyennes de la composante de chroma et de la composante de teinte sont pondérées respectivement par des fonctions de pondération $S^{ref/test}{}_{Cmoyi,j}$ et $S^{ref/test}{}_{Hmoyi,j}$ permettant d'uniformiser dans tout l'espace CIELAB les variations moyennes de chroma et de teinte perçues, pour le calcul de la différence de couleur perçue $\Delta E^{*ref/test}{}_{moyi,j}$.

Le procédé selon l'invention permet ainsi d'estimer les erreurs de quantification chromatiques liées aux performances du système visuel en offrant de nombreux avantages. Il utilise un espace perceptif de représentation des couleurs, défini de manière empirique et reconnu par la communauté scientifique. Il permet d'adapter une métrique des différences de couleurs perçues en fonction du contenu fréquenciel de l'image. D'autre part, il fonctionne sur des images fixes quel que soit le type de codage utilisé. Enfin, il peut être adapté en fonction des caractéristiques propres au système de visualisation.

[Brève description des figures]

La présente invention sera mieux comprise et des avantages supplémentaires apparaîtront à la lecture de la description qui va suivre, dans laquelle seront détaillés le procédé selon l'invention ainsi qu'un mode de réalisation préféré de la présente invention, illustrés par les figures jointes, dans lesquelles :

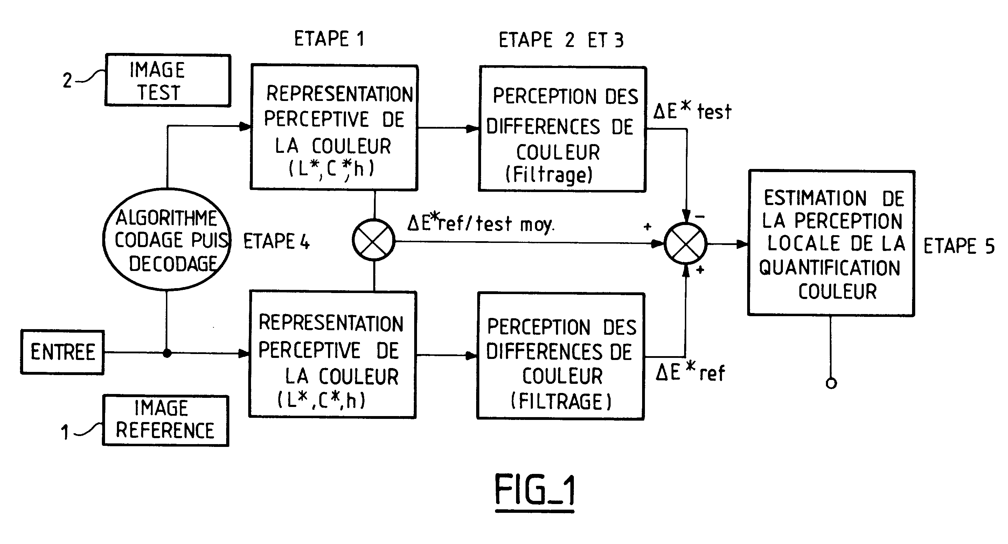

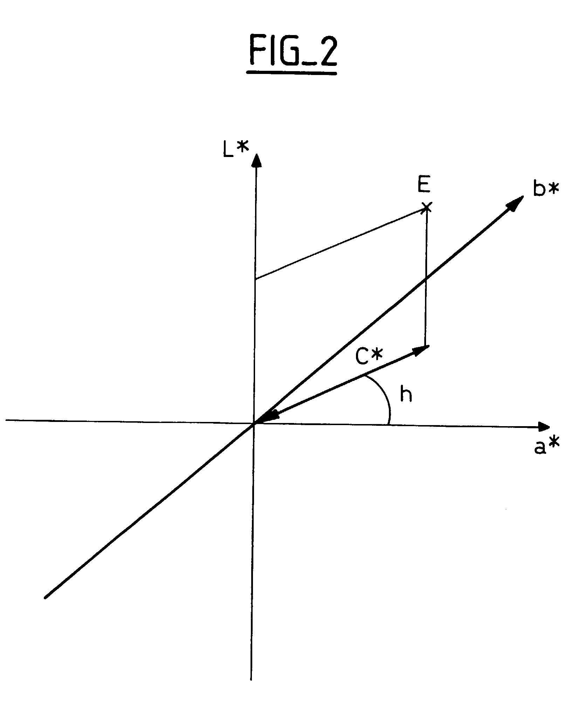

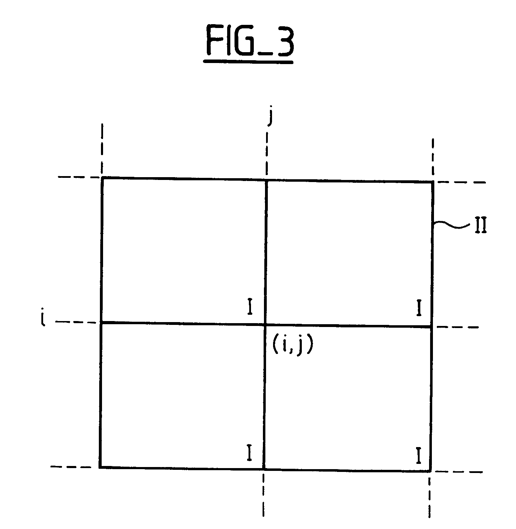

. la figure 1 représente le bloc diagramme synoptique du procédé d'estimation de la perception locale de la quantification chromatique d'une image fixe selon l'invention,
. la figure 2 représente les trois attributs de couleur dans l'espace uniforme chromatique CIELAB en coordonnées cartésiennes ($L^{*}a^{*}b^{*}$) ainsi qu'en coordonnées cylindriques ($L^{*}C^{*}h$), et
. la figure 3 représente une fenêtre centrée sur un point de l'image de référence ou de test.

[Description détaillée du mode de réalisation de l'invention]

Dans la description du mode de réalisation de l'invention qui va suivre, le procédé selon l'invention est appliqué à des signaux numériques $Y$, $Cr$ et $Cb$ du format vidéo 4:2:2 dont les spécifications sont décrites dans la recommandation de l'Union Internationale des Télécommunications, UIT-R BT.601-4 « *Paramètres de codage de télévision numérique pour studio* ».

Comme cela est représenté sur la figure 1, le procédé selon l'invention consiste notamment à traiter parallèlement l'image de référence 1 (image quantifiée mais non codée) et l'image de test 2 (image codée). Dans un premier temps, le mode de réalisation du procédé selon l'invention sera décrit comme étant appliqué au traitement de l'image de référence 1, le traitement de l'image de test 2 s'effectuant parallèlement de manière similaire.

[Etape 1 :]

Comme cela est représenté sur la figure 1, la première étape du procédé selon l'invention consiste à transformer les signaux numériques 4:2:2 en composantes achromatique $L^{*}$ (axe achromatique perpendiculaire au triangle des couleurs, comme cela est représenté sur la figure 2), et chromatiques $a^{*}$ et $b^{*}$ (axes chromatiques dans le plan du triangle des couleurs), dans l'espace chromatique CIELAB (abréviation de CIE 1976 ($L^{*}a^{*}b^{*}$)), par des transformations non linéaires. Cet espace chromatique CIELAB a été recommandé par la Commission Internationale de l'Eclairage (CIE) en 1976 pour être utilisée en tant qu'espace de référence pour décrire l'apparence colorée, il est défini dans le supplément N°2 à la publication de la CIE N°15 (E-1.3.1) 1971/ (TC-1.3.) 1978, Recommandation 2.

Pour chaque point de l'image de référence 1 (image numérisée mais non codée) différentes transformations sont appliquées qui permettent de passer de la représentation des signaux numériques dans le format 4:2:2, c'est à dire d'une composante achromatique (ou luminance) $Y_Q$ et de deux composantes chromatiques ($Cr_Q$, $Cb_Q$), à la représentation perceptive des couleurs dans l'espace chromatique CIELAB.

Chaque point est référencé par son indice de ligne i et son indice de colonne j, dans le présent mode de réalisation, le nombre total de lignes est égal à 576, et le nombre de colonnes est égal à 720. Il est noter que seules les valeurs impaires de j sont utilisées puisque dans le format vidéo 4:2:2, seul un point sur deux est codé en couleur. Dans une première transformation, les signaux numériques $Y_{Qi,j}$, $Cr_{Qi,j}$ et $Cb_{Qi,j}$ sont convertis en données analogiques $Y_{i,j}$, $Dr_{i,j}$ et $Db_{i,j}$ selon les équations (1a), (1b) et (1c) suivantes :

$$Y_{i,j} = (Y_{Qi,j} \text{-}16)/ 219 \qquad (1a)$$

$$Dr_{i,j} = (Cr_{Qi,j}\text{-}128)/160 \qquad (1b)$$

$$Db_{i,j} = (Cb_{Qi,j}\text{-}128)/126 \qquad (1c)$$

Puis, dans une seconde transformation, les signaux analogiques obtenus $Y_{i,j}$, $Dr_{i,j}$ et $Db_{i,j}$ sont convertis en composantes Rouge $R_{i,j}$, Vert $V_{i,j}$ et Bleu $B_{i,j}$, appliquées directement au tube cathodique de l'écran de visualisation couleur, en utilisant la matrice de transformation normalisée 4:2:2 suivante :

$$\begin{pmatrix} R_{i,j} \\ V_{i,j} \\ B_{i,j} \end{pmatrix} = \begin{pmatrix} 1 & 1 & 0 \\ 1 & -0.509 & -0.194 \\ 1 & 0 & 1 \end{pmatrix} \bullet \begin{pmatrix} Y_{i,j} \\ Dr_{i,j} \\ Db_{i,j} \end{pmatrix} \qquad (2)$$

Afin de tenir compte de la non linéarité du tube (correction γ), ces composantes $R_{i,j}$, $V_{i,j}$ et $B_{i,j}$ obtenus par l'équation (2) sont transformées en composantes «gammatisées» suivantes :

$$R_{gami,j} = (Gain_R \cdot R_{i,j} + Offset_R)^\gamma, \qquad (3a)$$

$$V_{gami,j} = (Gain_V \cdot V_{i,j} + Offset_V)^\gamma, \qquad (3b)$$

$$B_{gami,j} = (Gain_B \cdot B_{i,j} + Offset_B)^\gamma, \qquad (3c)$$

les paramètres $Gain_R$, $Gain_V$ et $Gain_B$ étant les gains déterminant l'amplitude du signal attaquant le tube, et $Offset_R$, $Offset_V$ et $Offset_B$ les valeurs de seuil correspondantes.

L'Union Européenne de Radiodiffusion (U.E.R.) recommande l'utilisation d'une valeur de γ égale à 2,2, ainsi que des valeurs de gain et de seuil égales respectivement à 1 et 0. Cependant, il faut préciser que ces valeurs dépendent du type d'écran utilisé et de son étalonnage. Une variation des boutons de contraste et de luminosité du moniteur pouvant modifier ces valeurs, les valeurs de correction γ (2< γ < 3, en fonction des technologies d'écran utilisées), de gain et de seuil seront de préférence déterminées de manière précise, afin d'assurer une représentation des couleurs fidèle aux données d'origine.

Une quatrième transformation consiste à transformer les composantes $R_{gami,j}$, $V_{gami,j}$ et $B_{gami,j}$ dans l'espace CIE 1931 (triangle des couleurs) en composantes colorimétriques $X_{i,j}$, $Y_{i,j}$ et $Z_{i,j}$ exprimées en candela par mètre carré (cd/m2) indépendantes du système de visualisation utilisé. La matrice de transformation à utiliser dépend de la répartition spectrale des luminophores de l'écran utilisé, cependant, dans le mode de réalisation décrit ici, la matrice utilisée ci-dessous dans l'équation (4) est celle recommandée par l'U.E.R. L'écran considéré dans ce cas, est un tube cathodique dont les primaires à leurs maximum fournissent un stimulus blanc normalisé, correspondant à la répartition spectrale d'énergie de l'un des illuminants normalisés CIE, comme par exemple le $D_{65}$ (étalon correspondant à la lumière du jour sous un ciel gris et de température de couleur 6500°K). La spécification colorimétrique de ces primaires peut être modifiée à partir d'un étalonnage spectroradiométrique des primaires si les conditions d'utilisation de l'écran sont différentes.

$$\begin{pmatrix} X_{i,j} \\ Y_{i,j} \\ Z_{i,j} \end{pmatrix} = \begin{pmatrix} 0.4306 & 0.3415 & 0.1784 \\ 0.2220 & 0.7067 & 0.0713 \\ 0.0202 & 0.1296 & 0.9393 \end{pmatrix} \bullet \begin{pmatrix} R_{gam_{i,j}} \\ V_{gam_{i,j}} \\ B_{gam_{i,j}} \end{pmatrix} \bullet Y_{\max} \qquad (4)$$

avec $Y_{max}$ = 70 cd/m2 correspondant à la luminance du blanc obtenu lorsque les valeurs $R_{gami,j}$, $V_{gami,j}$ et $B_{gami,j}$ sont égales à l'unité, la matrice de transformation utilisée correspond à la matrice du blanc normalisé choisi, donnée par la norme UER.

Puis, lors d'une cinquième transformation, les composantes colorimétriques $X_{i,j}$, $Y_{i,j}$ et $Z_{i,j}$ subissent une transformation non linéaire qui permet de passer à la représentation dans l'espace perceptif CIELAB évoqué plus haut, espace qui reflète le mieux le comportement de l'oeil par rapport à la couleur :

$$L*_{i,j} = f\left(\frac{Y_{i,j}}{Yn}\right) \qquad (5a)$$

$$a*_{i,j} = \frac{500}{116} \cdot \left[ f\left(\frac{X_{i,j}}{Xn}\right) - f\left(\frac{Y_{i,j}}{Yn}\right) \right] \qquad (5b)$$

$$b*_{i,j} = \frac{200}{116} \cdot \left[ f\left(\frac{Y_{i,j}}{Yn}\right) - f\left(\frac{Z_{i,j}}{Zn}\right) \right] \qquad (5c)$$

avec la fonction $f$ définie selon les valeurs des rapports des composantes colorimétriques $Q$ suivantes :

$$f(Q) = 903,3 . Q \qquad \text{si } Q < 0,008856, \qquad (6a)$$

$$f(Q) = 116 . Q^{1/3} - 16 \qquad \text{si } Q \geq 0,008856, \qquad (6b)$$

avec $Q$ correspondant à $X/X_n$, $Y/Y_n$ et $Z/Z_n$, $X_n$, $Y_n$ et $Z_n$ étant les composantes colorimétriques du blanc de l'écran normalisé à 100 cd/m2. Dans le cas particulier d'un blanc $D_{65}$, on obtient $X_n = 95,05$, $Y_n = 100$ et $Z_n = 108,91$.

Enfin, lors d'une sixième étape de transformation, en passant de la représentation cartésienne ($L*a*b*$) des composantes dans l'espace CIELAB à la représentation cylindrique ($L*C*h$) telle que représenté sur la figure 2, on fait apparaître les trois attributs de la perception des couleurs, c'est à dire, la clarté psychométrique $L*$ définie précédemment, le chroma $C*$ et l'angle de teinte $h$ (en degré) qui vont servir de données de base pour définir la perception des différences de couleurs dans cet espace. La clarté psychométrique $L*$, le chroma $C*$ et la teinte $h$ sont définis notamment dans le rapport technique CIE 116-1995, pages 7 et 8.

$$C*_{i,j} = [(a*_{i,j})^2 + (b*_{i,j})^2]^{1/2}, \qquad (7)$$

$$\text{si } b*_{i,j} \neq 0, \qquad h_{i,j} = 90 . (2 - sgn(b*_{i,j})) - arctg(a*_{i,j}/b*_{i,j}) \qquad (8a)$$

$$\text{si } b*_{i,j} = 0 \text{ et } a*_{i,j} \neq 0, \qquad h_{i,j} = 90 . (1 - sgn(a*_{i,j})), \text{ et} \qquad (8b)$$

si $b^*_{i,j} = 0$ et $a^*_{i,j} = 0$,         $h_{i,j}$ n'est pas défini.

où $sgn(x)$ 0 1 si $x \geq 0$ et $sgn(x) = -1$ si $x < 0$.

L'image de référence 1 est divisée en un certain nombre de fenêtres II de 31×31 points centrée sur le point (i,j), correspondant à 2×2 macroblocs I comme cela est indiqué sur la figure 3, sur laquelle sont calculées les composantes colorimétriques de la couleur dite moyenne. Ces composantes sont appliquées au point (i,j). L'opération est répétée pour chaque point (i,j) de l'image, en déplaçant la fenêtre courante II sur laquelle est effectuée le calcul des composantes colorimétriques de la couleur moyenne, sur l'ensemble de l'image. On a ainsi l'égalité (9) :

$$a^*_{moy\,i,j} = \frac{1}{2K+1} \cdot \frac{1}{2L+1} \cdot \sum_{k=-K}^{K} \sum_{l=-L}^{L} a^*_{i+k,j+2L} \qquad (9)$$

avec k et l les indices respectifs de lignes et de colonnes de la fenêtre courante, et $K = 15$ et $L = 7$.

Les valeurs de $a$ ne sont que de quinze, car, si la fenêtre courante est bien carrée du point de vue spatial, les composantes colorimétriques ne sont définies qu'un point sur deux dans la direction horizontale.

Les composantes $b^*_{moy\,i,j}$, $C^*_{moy\,i,j}$ et $h_{moy\,i,j}$ sont calculées de façon similaire en remplaçant dans l'équation (4) la composante $a^*_{i+k,j+2l}$ par $b^*_{i+k,j+2l}$, $C^*_{i-k,j+2l}$ et $h_{i+k,j+2l}$.

*[Etape 2 :]*

Selon une caractéristique importante de la présente invention, la seconde étape du procédé selon l'invention consiste à calculer les différentes variations entre les valeurs de chroma et de teinte de chaque point de la fenêtre courante et les valeurs moyennes calculées précédemment sur un voisinage du point courant, par exemple sur une fenêtre carrée II de 31×31 points correspondant à quatre macroblocs I conjoints, comme cela est représenté sur la figure 3. Ces valeurs seront ensuite utilisées dans la formule de différence de couleur perçue pour chaque point de l'image en déplaçant la fenêtre courante :

$$(\Delta C^*_{i,j})_{k,l} = (C^*_{i+k,j+2l} - C^*_{moy\,i,j}) , \qquad (10a)$$

$$(\Delta H^*_{i,j})_{k,l} = A_{i+k,j+2l}/(B_{i+k,j+2l})^{1/2} , \qquad (10b)$$

avec :

$$A_{i+k,j+2l} = a^*_{i+k,j+2l} \cdot b^*_{moy\,i,j} - b*_{i+k,j+2l} \cdot a^*_{moy\,i,j} , \qquad (11a)$$

$$B_{i+k,j+2l} = \tfrac{1}{2} \cdot (C^*_{i+k,j+2l} \cdot C^*_{moy\,i,j} + a^*_{i+k,j+2l} \cdot a^*_{moy\,i,j} + b^*_{i+k,j+2l} \cdot b^*_{moy\,i,j}). \qquad (11b)$$

Les fonctions de pondération telles que définies dans le rapport technique CIE 116-1995 (page 9) cité au-dessus, permettent d'uniformiser dans tout l'espace CIELAB les variations relatives de chroma et de teinte perçues. Elles dépendent de la moyenne géométrique des chroma des deux couleurs à comparer :

$$(S_{C\,i,j})_{k,l} = 1 + 0{,}045 \cdot (C^*_{i+k,j+2l} \cdot C^*_{moy\,i,j})^{1/2} \qquad (12a)$$

$$(S_{H\,i,j})_{k,l} = 1 + 0{,}015 \cdot (C^*_{i+k,j+2l} \cdot C^*_{moy\,i,j})^{1/2} \qquad (12b)$$

Dans le cadre de la présente invention, les variations de clarté psychométrique ne sont pas calculées car le but de la présente invention est de fournir une métrique des erreurs de quantification chromatiques.

De la même manière, on calcule les variations moyennes de chroma $\Delta C^*_{moy\,i,j}$ et de teintes $\Delta H^*_{moy\,i,j}$ sur la fenêtre

courante II :

$$\Delta C^{*}{}_{moy_{i,j}} = \frac{1}{2K+1} \cdot \frac{1}{2L+1} \cdot \sum_{k=-K}^{K} \sum_{l=-L}^{L} \left| \left( \Delta C^{*}{}_{i,j} \right)_{k,l} \right| \quad \text{avec } K = 15 \text{ et } L = 7 \qquad (13a)$$

$$\Delta H^{*}{}_{moy_{i,j}} = \frac{1}{2K+1} \cdot \frac{1}{2L+1} \cdot \sum_{k=-K}^{K} \sum_{l=-L}^{L} \left| \left( \Delta H^{*}{}_{i,j} \right)_{k,l} \right| \quad \text{avec } K = 15 \text{ et } L = 7 \qquad (13b)$$

Pour le calcul des fonctions de pondération, on considère uniquement le chroma moyen et la teinte moyenne sur la fenêtre courante, on déduit des équations (12a) et (12b) :

$$S_{Cmoyi,j} = 1 + 0,045. C^{*}{}_{moyi,j} \qquad (14a)$$

$$S_{Hmoyi,j} = 1 + 0,015. C^{*}{}_{moyi,j} \qquad (14b)$$

Cependant, la différence de couleur perçue entre le point (i,j) et son voisinage (points de la fenêtre courante) doit être calculé en tenant compte du contenu fréquenciel de la fenêtre considérée.

[Etape 3 :]

Dans ce but, une des caractéristiques importantes de la présente invention consiste à appliquer aux variations de chroma et de teinte calculées précédemment, lors d'une troisième étape du procédé, des facteurs paramétriques $K_C$ et $K_H$ pour tenir compte du contenu fréquenciel de la fenêtre considérée. Selon l'invention, ces facteurs correspondent respectivement au produit normalisé des coefficients de deux filtres numériques vertical et horizontal identiques, c'est à dire que l'oeil agit comme un filtre horizontal et vertical.

Les coefficients des filtres vertical et horizontal affectés aux variations de chroma du point (i,j) par rapport à la fenêtre courante sont obtenus comme suit :

$$\left( K_{C_{i,j}} \right)_k = \frac{A_{C_{i,j}}}{16} \cdot \frac{1}{\sqrt{2\pi}\sigma_{1_{C,j}}} \cdot H_4\left( \frac{k \cdot d}{\sigma_{1_{C,j}}} \right) \cdot e^{-\frac{1}{2}\left( \frac{k \cdot d}{\sigma_{1_{C,j}}} \right)^2} + \frac{1}{\sqrt{2\pi}\sigma_{2_{C,j}}} \cdot e^{-\frac{1}{2}\left( \frac{k \cdot d}{\sigma_{2_{C,j}}} \right)^2} \qquad (15a)$$

$$\left( K_{C_{i,j}} \right)_l = \frac{A_{C_{i,j}}}{16} \cdot \frac{1}{\sqrt{2\pi}\sigma_{1_{C,j}}} \cdot H_4\left( \frac{2 \cdot l \cdot d}{\sigma_{1_{C,j}}} \right) \cdot e^{-\frac{1}{2}\left( \frac{2 \cdot l \cdot d}{\sigma_{1_{C,j}}} \right)^2} + \frac{1}{\sqrt{2\pi}\sigma_{2_{C,j}}} \cdot e^{-\frac{1}{2}\left( \frac{2 \cdot l \cdot d}{\sigma_{2_{C,j}}} \right)^2} \qquad (15b)$$

où $H_4$ est un polynôme de Hermite d'ordre 4 : $H_4(x) = x^4 - 6.x^2 + 3$, avec comme paramètres :

$$A_{C_{i,j}} = 2.47 \cdot \ln\left( 1 + \frac{\Delta C^{*}{}_{moy_{i,j}}}{S_{C_{moy_{i,j}}}} \right) \qquad (16a)$$

$$\sigma_{1_{C_{i,j}}} = \frac{1}{\pi \cdot f_{0_{C_{i,j}}}} \qquad\qquad f_{0_{C_{i,j}}} = -3.22 \cdot \sin\!\left(h_{moy_{i,j}} - 64\right) + 11.7 \qquad\qquad (16b)$$

$$\sigma_{2_{C_{i,j}}} = 1.11 \cdot \sigma_{1_{C_{i,j}}} \qquad\qquad (16c)$$

avec $d$, distance angulaire (en degré) moyenne entre deux points juxtaposés de l'image par rapport à la distance de l'observateur à l'écran $d = \operatorname{arctg}(1/n.551)$, où $n$ est le rapport entre la distance de l'observateur à l'écran et la hauteur d'écran (cette valeur est habituellement égale à 6 dans le cas de la télévision standard).

Les facteurs K, définis par la CIE (publication CIE No 101) pour des conditions de références précises, sont égaux à l'unité. Dans la présente invention, les coefficients de filtre K ont été obtenus par des expériences psychophysiques sur des observateurs à qui ont été présentées des différences de couleurs sur un écran de visualisation. Leurs réponses à des critères bien définis étant recueillies et analysées, afin de s'éloigner des conditions de référence de la CIE, notamment pour introduire une fréquence spatiale dans la stimulation, et de modéliser l'évolution des facteurs K en fonction des nouveaux paramètres de la stimulation.

Ce filtre spatial est multi-variable dans le sens où ses coefficients $(K_{Cij})_k$ et $(K_{Ci,j})_l$ dépendent de la variation moyenne pondérée des chroma de la fenêtre courante et de l'angle de teinte de la couleur moyenne de la fenêtre courante. Les valeurs des coefficients doivent être recalculées pour chaque fenêtre courante.

Le facteur de normalisation est calculé comme suit :

$$N_{C_{i,j}} = \sum_{k=-K}^{K} \sum_{l=-L}^{L} \left[ \left(K_{C_{i,j}}\right)_k \cdot \left(K_{C_{i,j}}\right)_l \right] \ \text{avec K = 15 et L = 7} \qquad\qquad (17)$$

De la même manière que précédemment, à partir des équations *(15a)*, *(15b)*, *(16a)*, *(16b)*, *(16c)* et *(17)*, seuls les coefficients changeant, on obtient les coefficients suivants pour des filtres vertical et horizontal affectés aux variations de teinte du point (i,j) par rapport à la fenêtre courante :

$$\left(K_{H_{i,j}}\right)_k = \frac{A_{H_{i,j}}}{16} \cdot \frac{1}{\sqrt{2\pi}\,\sigma_{1_{H_{i,j}}}} \cdot H_4\!\left(\frac{k \cdot d}{\sigma_{1_{H_{i,j}}}}\right) \cdot e^{-\frac{1}{2}\left(\frac{k \cdot d}{\sigma_{1_{H_{i,j}}}}\right)^2} + \frac{1}{\sqrt{2\pi}\,\sigma_{2_{H_{i,j}}}} \cdot e^{-\frac{1}{2}\left(\frac{k \cdot d}{\sigma_{2_{H_{i,j}}}}\right)^2} \qquad (18a)$$

$$\left(K_{H_{i,j}}\right)_l = \frac{A_{H_{i,j}}}{16} \cdot \frac{1}{\sqrt{2\pi}\,\sigma_{1_{H_{i,j}}}} \cdot H_4\!\left(\frac{2 \cdot l \cdot d}{\sigma_{1_{H_{i,j}}}}\right) \cdot e^{-\frac{1}{2}\left(\frac{2 \cdot l \cdot d}{\sigma_{1_{H_{i,j}}}}\right)^2} + \frac{1}{\sqrt{2\pi}\,\sigma_{2_{H_{i,j}}}} \cdot e^{-\frac{1}{2}\left(\frac{2 \cdot l \cdot d}{\sigma_{2_{H_{i,j}}}}\right)^2} \quad (18b)$$

avec :

$$A_{H_{i,j}} = 2.34 \cdot \ln\!\left(1 + \frac{\Delta H^*_{moy_{i,j}}}{S_{H_{moy_{i,j}}}}\right) \qquad\qquad (19a)$$

$$\sigma_{1_{H_{i,j}}} = \frac{1}{\pi \cdot f_{0_{H_{i,j}}}} \qquad\qquad f_{0_{H_{i,j}}} = 5.61 \cdot \left|\sin\!\left(h_{moy_{i,j}} - 27\right)\right| + 5.4 \qquad\qquad (19b)$$

$$\sigma_{2_{H_{i,j}}} = 1.21 \cdot \sigma_{1_{H_{i,j}}} \qquad (19c)$$

Le facteur de normalisation est ainsi obtenu :

$$N_{H_{i,j}} = \sum_{k=-K}^{K} \sum_{l=-L}^{L} \left[ \left( K_{H_{i,j}} \right)_k \cdot \left( K_{H_{i,j}} \right)_l \right] \text{ avec } K = 15 \text{ et } L = 7 \qquad (20)$$

Ainsi, au point (i,j), la différence de couleur perçue entre la couleur du point (i,j) et la couleur moyenne sur la fenêtre courante en fonction du voisinage est alors obtenue en appliquant les coefficients des filtres numériques $(K_{Ci,j})_h$, $(K_{Ci,j})_l$, $(K_{Hi,j})_k$ et $(K_{Hi,j})_l$ aux variations de chroma et de teinte pondérées point à point et en faisant la somme quadratique de ces valeurs :

$$\Delta \tilde{E}^*_{i,j} = \left\{ \left[ \frac{1}{N_{C_{i,j}}} \cdot \sum_{k \in V(i,j)} \sum_{l \in V(i,j)} \left( \left( K_{C_{i,j}} \right)_k \cdot \left( K_{C_{i,j}} \right)_l \cdot \frac{\left( \Delta C^*_{i,j} \right)_{k,l}}{\left( S_{C_{i,j}} \right)_{k,l}} \right) \right]^2 + \left[ \frac{1}{N_{H_{i,j}}} \cdot \sum_{k \in V(i,j)} \sum_{l \in V(i,j)} \left( \left( K_{H_{i,j}} \right)_k \cdot \left( K_{H_{i,j}} \right)_l \cdot \frac{\left( \Delta H^*_{i,j} \right)_{k,l}}{\left( S_{H_{i,j}} \right)_{k,l}} \right) \right]^2 \right\}^{1/2} \quad (21)$$

L'équation $(21)$ correspond à la différence de couleur perçue sur l'image de référence 1. Le procédé de calcul est répété pour l'image de test 2, c'est à dire l'image codée. On obtient alors deux différences de couleur filtrées $\Delta E^{\sim *ref}_{i,j}$ et $\Delta E^{\sim *test}_{i,j}$ respectivement pour l'image de référence 1 et l'image de test 2, affectées au point (i,j).

*[Etape 4 :]*

Selon une autre caractéristique de la présente invention, une quatrième étape consiste à estimer une différence de couleur perçue entre les représentations colorimétriques des couleurs moyennes calculées sur la fenêtre courante de l'image de référence 1 et la fenêtre courante de l'image de test 2. La formule de différence de couleur perçue utilisée ici s'applique à des valeurs moyennes et ne dépend donc pas du contenu fréquenciel de la scène.

$$\Delta E^{*ref/test}_{moy_{i,j}} = \left[ \left( \frac{\Delta C^{*ref/test}_{moy_{i,j}}}{S^{ref/test}_{C_{moy_{i,j}}}} \right)^2 + \left( \frac{\Delta H^{*ref/test}_{moy_{i,j}}}{S^{ref/test}_{H_{moy_{i,j}}}} \right)^2 \right]^{1/2} \qquad (22)$$

où:

$$\Delta C^{*ref/test}_{moy_{i,j}} = \left( C^{*ref}_{moy_{i,j}} - C^{*test}_{moy_{i,j}} \right), \qquad (23a)$$

$$S^{ref/test}_{C_{moy_{i,j}}} = 1 + 0{,}045 \cdot \left( C^{*ref}_{moy_{i,j}} \cdot C^{*test}_{moy_{i,j}} \right)^{1/2}, \qquad (23b)$$

$$\Delta H^{*ref/test}_{moy_{i,j}} = A^{ref/test}_{moy_{i,j}} / \left( B^{ref/test}_{moy_{i,j}} \right)^{1/2}, \qquad (23c)$$

avec :

$$A^{ref/test}_{moy_{i,j}} = a^{*ref}_{moy_{i,j}} \cdot b^{*test}_{moy_{i,j}} - b^{*test}_{moy_{i,j}} \cdot a^{*ref}_{moy_{i,j}} \qquad (24a)$$

$$B^{ref/test}_{moy_{i,j}} = \frac{1}{2} \cdot \left( C *^{ref}_{moy_{i,j}} \cdot C *^{test}_{moy_{i,j}} + a *^{ref}_{moy_{i,j}} \cdot a *^{test}_{moy_{i,j}} + b *^{ref}_{moy_{i,j}} \cdot b *^{test}_{moy_{i,j}} \right) \qquad (24b)$$

$$S^{ref/test}_{H_{moy_{i,j}}} = 1 + 0.015 \cdot \left( C *^{ref}_{moy_{i,j}} \cdot C *^{test}_{moy_{i,j}} \right)^{1/2} \qquad (24c)$$

*[Etape 5 :]*

Au cours de la cinquième étape, l'estimation de la distorsion locale des couleurs perçue entre l'image de référence et l'image codée pour chaque point (i,j) est calculée. Le processus d'analyse pour mettre en relief des différences entre images s'effectue soit en comparant directement les images lorsque cela est possible, soit à la suite d'un apprentissage par mémorisation. Le calcul de perception des distorsions locales chromatiques liées aux erreurs de quantification est donc basé sur la perception de différences entre l'image de référence et l'image de test.

Selon l'invention, l'estimation est basée sur la différence entre les variations de couleurs filtrées d'un point de l'image de référence et d'un point de l'image de test par rapport à leur voisinage respectif I $\Delta E^{\sim *ref}_{i,j}$ - $\Delta E^{\sim *test}_{i,j}$ I de l'équation *(21)*, et d'une différence de couleur perçue pondérée entre les couleurs moyennes de ces voisinage $k$. $\Delta E^{*ref/test}_{moyi,j}$ déduite de l'équation *(22)* de l'étape précédente. L'estimation est donnée par l'équation *(25)* suivante :

$$ERR^{ref/test}_{i,j} = I\Delta E^{\sim *ref}_{i,j} - \Delta E^{\sim *test}_{i,j}I + k.\Delta E^{*ref/test}_{moyi,j} \qquad (25)$$

avec $k \in [0,1]$.

On a ainsi obtenu l'erreur finale comme étant la somme de la différence de couleur filtrée du point de vue des fréquences spatiales $I\Delta E^{\sim *ref}_{i,j} - \Delta E^{\sim *test}_{i,j}I$ (qui peut être nulle), et la différence de couleur moyenne entre les voisinages des points $\Delta E^{*ref/test}_{moyi,j}$ (variation globale de couleur non filtrée).

*[Application industrielle]*

Comme cela a été décrit au-dessus, la présente invention est particulièrement bien adapté pour la perception locale des erreurs de quantification chromatique dans une image fixe quantifiée en 4 :2 :2 pré-encodée par différents algorithmes de compression, et codée dans l'espace chromatique CIELAB, cependant, elle peut être appliquée à d'autres type de signaux codés et espace chromatiques. Elle permet ainsi de tester les codeurs, et de trouver les algorithmes de codage plus proche des performances du système visuel.

Elle s'applique bloc d'image par bloc d'image, en tenant compte de la perception locale des distorsions de quantification chromatique de l'image entière, et permet ainsi d'obtenir une carte des valeurs de la perception des distorsions locales de couleurs liées à la quantification de l'image.

**Revendications**

1. Procédé d'estimation de la perception locale des erreurs de quantification chromatiques dans une image codée fixe, à partir d'une image de référence (1) non codée et d'une image de test (2) codée, une fenêtre de points (II) centrée sur chaque point (i,j) de l'image de référence (1) et de l'image de test (2) étant définie, caractérisé en ce qu'il comporte les étapes suivantes :

   *[étape 1 :]*

   . transformation des signaux numériques dudit point (i,j) en au moins une composante de chroma ($C^{*}_{i,j}$) et une composante de teinte ($h_{i,j}$) d'un espace chromatique ($L^{*}C^{*}h$), et calcul de la valeur moyenne pour chaque point (i,j) de l'image de référence et de l'image de test, de la composante de chroma ($C^{*}_{moyi,j}$) et la composante de teinte ($h_{moyi,j}$) sur ladite fenêtre (II) correspondant à un voisinage dudit point (ij),

   *[étape 2 :]*

   . calcul des différences de variation ([$\Delta C^{*}_{i,j}]_{k,}$ [$\Delta H^{*}_{i,j}]_{k,}$) entre les valeurs de chroma et de teinte dudit point (i,j), et les valeurs moyennes de chroma et de teinte sur la fenêtre (II) centrée sur ledit point (i,j) calculée lors de l'étape précédente, dont la somme sur les points (k,l) de la fenêtre donne les variations moyennes de chroma ($\Delta C^*_{moyi,j}$) et de teinte ($\Delta H^*_{moyi,j}$) sur la fenêtre courante (II) (k.l),

*[étape 3 :]*

. application aux variations de chroma ($[\Delta C^*_{i,j}]_{k,l}$) et de teinte ($[\Delta H^*_{i,j}]_{k,l}$) de facteurs paramétriques ($[K_{Ci,j}]_k$, $[K_{Ci,j}]_l$, $[K_{Hi,j}]_k$, $[K_{Hi,j}]_l$) correspondant aux coefficients de deux filtres numériques vertical et horizontal, et somme quadratique de ces valeurs pour le calcul de la différence de couleur perçue entre la couleur de chaque point (i,j) et la couleur moyenne sur la fenêtre courante (II) de l'image de référence ($\Delta \tilde{E}^{*ref}_{i,j}$) et de l'image de test ($\Delta \tilde{E}^{*test}_{i,j}$),

*[étape 4 :]*

. calcul sur les fenêtres courantes de l'image de référence (1) et de l'image de test (2), de la différence de couleur ($\Delta E^{*test/ref}_{moyi,j}$) correspondant à la somme quadratique de la variation de chroma ($\Delta C^{*ref/test}_{moyi,j}$) et de teinte ($\Delta H$) des couleurs moyennes, et

*[étape 5 :]*

. calcul de la perception locale ($ERR^{ref/test}{i,j}$) de l'erreur de quantification chromatique de l'image fixe, par la différence entre les variations de couleurs filtrées du point (i,j) de l'image de référence ($\Delta \tilde{E}^{*ref}_{i,j}$) et du point (i,j) correspondant de l'image de test ($\Delta \tilde{E}^{*test}_{i,j}$), ajoutée à la différence de couleur perçue entre les couleurs moyennes calculées lors de l'étape précédente ($\Delta E^{*ref/test}_{moyi,j}$).

2. Procédé selon la revendication 1, caractérisé en ce que l'étape de transformation des signaux numériques dudit point (i,j) (*[étape 1]*) comporte les transformations suivantes :

. transformation des signaux numériques achromatique $Y_{Qi,j}$ et chromatiques $Cr_{Qi,j}$ et $Cb_{Qi,j}$ dudit point (i,j) en données analogiques $Y_{i,j}$, $Dr_{i,j}$ et $Db_{i,j}$, telles que :

$$Y_{i,j} = (Y_{Qi,j} - 16)/219,$$

$$Dr_{i,j} = (Cr_{Qi,j} - 128)/160, \text{ et}$$

$$Db_{i,j} = (Cb_{Qi,j} - 128)/126,$$

. transformation des signaux analogiques $Y_{i,j}$, $Dr_{i,j}$ et $Db_{i,j}$ en composantes Rouge $R_{i,j}$, Vert $V_{i,j}$ et Bleue $B_{i,j}$, telles que :

$$\begin{pmatrix} R_{i,j} \\ V_{i,j} \\ B_{i,j} \end{pmatrix} = \begin{pmatrix} 1 & 1 & 0 \\ 1 & -0.509 & -0.194 \\ 1 & 0 & 1 \end{pmatrix} \bullet \begin{pmatrix} Y_{i,j} \\ Dr_{i,j} \\ Db_{i,j} \end{pmatrix}$$

. transformation des composantes $R_{i,j}$, $V_{i,j}$ et $B_{i,j}$, en composantes corrigée gamma $R_{gami,j}$, $V_{gami,j}$ et $B_{gami,j}$ telles que :

$$R_{gami,j} = (Gain_R.R_{i,j} + Offset_R)^{\gamma},$$

$$V_{gami,j} = (Gain_V.V_{i,j} + Offset_V)^{\gamma},$$

$$B_{gami,j} = (Gain_B \cdot B_{i,j} + Offset_B)^{\gamma} ,$$

où, $Gain_R$, $Gain_V$ et $Gain_B$ étant les gains déterminant l'amplitude du signal attaquant le tube, et $Offset_R$, $Offset_V$ et $Offset_B$ les valeurs de seuil correspondantes,

- transformation des composantes $R_{gami,j}$, $V_{gami,j}$ et $B_{gami,j}$ en composantes colorimétriques $X_{i,j}$, $Y_{i,j}$ et $Z_{i,j}$ telles que :

$$\begin{pmatrix} X_{i,j} \\ Y_{i,j} \\ Z_{i,j} \end{pmatrix} = \begin{pmatrix} 0.4306 & 0.3415 & 0.1784 \\ 0.2220 & 0.7067 & 0.0713 \\ 0.0202 & 0.1296 & 0.9393 \end{pmatrix} \bullet \begin{pmatrix} R_{gam_{i,j}} \\ V_{gam_{i,j}} \\ B_{gam_{i,j}} \end{pmatrix} \bullet Y_{max}$$

- transformation non linéaire des composantes colorimétriques $X_{i,j}$, $Y_{i,j}$ et $Z_{i,j}$ en composante de clarté psychométrique $L^*$, et composantes de teinte $a^*$ et b$^*$, telles que :

$$L^*_{i,j} = f\left(\frac{Y_{i,j}}{Yn}\right)$$

$$a^*_{i,j} = \frac{500}{116} \cdot \left[ f\left(\frac{X_{i,j}}{Xn}\right) - f\left(\frac{Y_{i,j}}{Yn}\right) \right]$$

$$b^*_{i,j} = \frac{200}{116} \cdot \left[ f\left(\frac{Y_{i,j}}{Yn}\right) - f\left(\frac{Z_{i,j}}{Zn}\right) \right]$$

où f est définie à partir des valeurs des rapports des composantes colorimétriques Q suivantes :

$$f(Q) = 903,3. Q \qquad \text{si } Q < 0,008856, \text{ et}$$

$$f(Q) = 116. Q^{1/3} - 16 \qquad \text{si } Q \geq 0,008856.$$

- et transformation des composantes psychométrique $L^*$, et des composantes de teinte $a^*$ et $b^*$ en composantes cylindriques de clarté psychométrique $L^*$, de chroma $C^*$ et de teinte $h$, telles que :

$$C^*_{i,j} = [(a^*_{i,j})^2 + (b^*_{i,j})^2]^{1/2} ,$$

$$\text{si } b^*_{i,j} \neq 0, \qquad h_{i,j} = 90.(2\text{-sgn}(b^*_{i,j})) - arctg(a^*_{i,j}/b^*_{i,j})$$

$$\text{si } b^*_{i,j} = 0 \text{ et } a^*_{i,j} \neq 0, \qquad h_{i,j} = 90.(1\text{- sgn}(a^*_{i,j})), \text{ et}$$

$$\text{si } b^*_{i,j} = 0 \text{ et } a^*_{i,j} = 0, \qquad h_{i,j} \text{ n'est pas défini.}$$

où sgn(x)= 1 si x≥0 et sgn(x)= -1 si x<0.

3. Procédé selon la revendication 1 ou 2, caractérisé en ce que la valeur de gamma ($\gamma$) est dans une gamme de 2 à 3.

4. Procédé selon l'une quelconque des revendications précédentes, caractérisé en ce que, dans l'étape 2, la différence de teinte ($[\Delta H^*_{i,j}]_{k,l}$) est obtenue par l'équation suivante :

$$(\Delta H^*_{i,j})_{k,l} = A_{i+k,j+2l} / (B_{i+k,j+2l})^{1/2} \, ,$$

avec :

$$A_{i+k,j+2l} = a^*_{i+k,j+2l} \cdot b^*_{moyi,j} - b^*_{i+k,j+2l} \cdot a^*_{moyi,j} \, ,$$

$$B_{i+k,j+2l} = \tfrac{1}{2} . (C^*_{i+k,j+2l} \cdot C^*_{moyi,j} + a^*_{i+k,j+2l} \cdot a^*_{moyi,j} + b^*_{i+k,j+2l} \cdot b^*_{moyi,j}).$$

5. Procédé selon l'une quelconque des revendications précédentes, caractérisé en ce que, dans l'étape 3, les différences de chroma ($[\Delta C^*_{i,j}]_{k,l}$) et de teinte ($[\Delta H^*_{i,j}]_{k,l}$) sont pondérées point à point par des fonctions de pondérations ($[S_{Ci,j}]_{k,l}$, $[S_{Hi,j}]_{k,l}$) permettant d'uniformiser respectivement les variations relatives de chroma et de teinte perçue, pour le calcul de la différence de couleur perçue ($\Delta E{\sim}^*_{i,j}$).

6. Procédé selon l'une quelconque des revendications précédentes, caractérisé en ce que, dans l'étape 4, les valeurs moyennes de la composante de chroma et de la composante de teinte sont pondérées respectivement par des fonctions de pondération ($S^{ref/test}_{Cmoyi,j}$, $S^{ref/test}_{Hmoyi,j}$) permettant d'uniformiser les variations moyennes de chroma et de teinte perçues. pour le calcul de la différence de couleur perçue ($\Delta E^{*ref/test}_{moyij}$).

7. Procédé selon l'une quelconque des revendications précédentes, caractérisé en ce que, dans l'étape 5, la valeur du facteur de pondération est dans une gamme de 0 à 1.

8. Procédé selon l'une quelconque des revendications précédentes, caractérisé en ce que l'on applique aux variations de chroma et de teintes calculées précédemment, des facteurs paramétriques $K_c$ et $K_h$ pour tenir compte du contenu fréquentiel de la fenêtre considérée, lesdits facteurs correspondant respectivement au produit normalisé des coefficients de deux filtres numériques vertical et horizontal identiques et sont exprimés par les équations suivantes :

$$\left(K_{C_{i,j}}\right)_k = \frac{A_{C_{i,j}}}{16} \cdot \frac{1}{\sqrt{2\pi}\sigma_{1_{C_{i,j}}}} \cdot H_4\left(\frac{k \cdot d}{\sigma_{1_{C_{i,j}}}}\right) \cdot e^{-\frac{1}{2}\left(\frac{k \cdot d}{\sigma_{1_{C_{i,j}}}}\right)^2} + \frac{1}{\sqrt{2\pi}\sigma_{2_{C_{i,j}}}} \cdot e^{-\frac{1}{2}\left(\frac{k \cdot d}{\sigma_{2_{C_{i,j}}}}\right)^2} \qquad (15a)$$

$$\left(K_{C_{i,j}}\right)_l = \frac{A_{C_{i,j}}}{16} \cdot \frac{1}{\sqrt{2\pi}\sigma_{1_{C_{i,j}}}} \cdot H_4\left(\frac{2 \cdot l \cdot d}{\sigma_{1_{C_{i,j}}}}\right) \cdot e^{-\frac{1}{2}\left(\frac{2 \cdot l \cdot d}{\sigma_{1_{C_{i,j}}}}\right)^2} + \frac{1}{\sqrt{2\pi}\sigma_{2_{C_{i,j}}}} \cdot e^{-\frac{1}{2}\left(\frac{2 \cdot l \cdot d}{\sigma_{2_{C_{i,j}}}}\right)^2} \qquad (15b)$$

où $H_4$ est un polynôme de Hermite d'ordre 4 avec comme paramètres:

$$A_{C_{i,j}} = 2.47 \cdot \ln\left(1 + \frac{\Delta C^*_{moy_{i,j}}}{S_{C_{moy_{i,j}}}}\right) \qquad (16a)$$

$$\sigma_{1_{C_{i,j}}} = \frac{1}{\pi \cdot f_{0_{C_{i,j}}}} \qquad f_{0_{C_{i,j}}} = -3.22 \cdot \sin\left(h_{moy_{i,j}} - 64\right) + 11.7 \qquad (16b)$$

$$\sigma_{2_{C_{i,j}}} = 1.11 \cdot \sigma_{1_{C_{i,j}}} \qquad\qquad (16c)$$

**9.** Procédé selon la revendication 8. caractérisé en ce que les coefficients pour des filtres vertical et horizontal affectés aux variations de teintes du point (i, j) par rapport à la fenêtre courante sont donnés pour les équations suivantes : avec

$$\left(K_{H_{i,j}}\right)_k = \frac{A_{H_{i,j}}}{16} \cdot \frac{1}{\sqrt{2\pi}\sigma_{1_{H_{i,j}}}} \cdot H_4\left(\frac{k \cdot d}{\sigma_{1_{H_{i,j}}}}\right) \cdot e^{-\frac{1}{2}\left(\frac{k \cdot d}{\sigma_{1_{H_{i,j}}}}\right)^2} + \frac{1}{\sqrt{2\pi}\sigma_{2_{H_{i,j}}}} \cdot e^{-\frac{1}{2}\left(\frac{k \cdot d}{\sigma_{2_{H_{i,j}}}}\right)^2} \quad (18a)$$

$$\left(K_{H_{i,j}}\right)_l = \frac{A_{H_{i,j}}}{16} \cdot \frac{1}{\sqrt{2\pi}\sigma_{1_{H_{i,j}}}} \cdot H_4\left(\frac{2 \cdot l \cdot d}{\sigma_{1_{H_{i,j}}}}\right) \cdot e^{-\frac{1}{2}\left(\frac{2 \cdot l \cdot d}{\sigma_{1_{H_{i,j}}}}\right)^2} + \frac{1}{\sqrt{2\pi}\sigma_{2_{H_{i,j}}}} \cdot e^{-\frac{1}{2}\left(\frac{2 \cdot l \cdot d}{\sigma_{2_{H_{i,j}}}}\right)^2} \quad (18b)$$

$$A_{H_{i,j}} = 2.34 \cdot \ln\left(1 + \frac{\Delta H^*_{moy_{i,j}}}{S_{H_{moy_{i,j}}}}\right) \qquad\qquad (19a)$$

$$\sigma_{1_{H_{i,j}}} = \frac{1}{\pi \cdot f_{0_{H_{i,j}}}} \qquad f_{0_{H_{i,j}}} = 5.61 \cdot \left|\sin\left(h_{moy_{i,j}} - 27\right)\right| + 5.4 \qquad (19b)$$

$$\sigma_{2_{H_{i,j}}} = 1.21 \cdot \sigma_{1_{H_{i,j}}} \qquad\qquad (19c)$$

Le facteur de normalisation est ainsi obtenu :

$$N_{H_{i,j}} = \sum_{k=-K}^{K} \sum_{l=-L}^{L} \left[\left(K_{H_{i,j}}\right)_k \cdot \left(K_{H_{i,j}}\right)_l\right] \text{ avec } K = 15 \text{ et } L = 7 \qquad (20)$$

ETAPE 1    ETAPE 2 ET 3

2 — IMAGE TEST

REPRESENTATION PERCEPTIVE DE LA COULEUR ($L^*, C^*, h$)

PERCEPTION DES DIFFERENCES DE COULEUR (Filtrage)

$\Delta E^*$ test

ALGORITHME CODAGE PUIS DECODAGE    ETAPE 4

$\Delta E^*$ref/test moy.

ESTIMATION DE LA PERCEPTION LOCALE DE LA QUANTIFICATION COULEUR    ETAPE 5

ENTREE

REPRESENTATION PERCEPTIVE DE LA COULEUR ($L^*, C^*, h$)

PERCEPTION DES DIFFERENCES DE COULEUR (FILTRAGE)

$\Delta E^*$ref

1 — IMAGE REFERENCE

FIG_1

EP 0 893 927 A1

# FIG_2

# FIG_3

**Office européen des brevets**

# RAPPORT DE RECHERCHE EUROPEENNE

Numéro de la demande

EP 98 40 1557

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 428 394 A (YAMAGAMI T. ET AL) 27 juin 1995 * colonne 5, ligne 38 - colonne 8, ligne 33 * * colonne 14, ligne 1 - colonne 17, ligne 10 * --- | 1 | H04N17/02 |
| A | EP 0 735 771 A (HEWLETT-PACKARD COMPANY) 2 octobre 1996 * page 6, ligne 46 - page 9, ligne 5 * --- | 1 | |
| A | EP 0 735 772 A (HEWLETT-PACKARD COMPANY) 2 octobre 1996 * page 4, ligne 32 - ligne 40 * --- | 1 | |
| A | US 5 463 702 A (TRUEBLOOD J.) 31 octobre 1995 * colonne 5, ligne 64 - colonne 13, ligne 34 * --- | 1 | |
| A | EP 0 520 250 A (MITSUBISHI DENKI KABUSHIKI) 30 décembre 1992 * colonne 7, ligne 19 - colonne 15, ligne 26 * --- | 1 | DOMAINES TECHNIQUES RECHERCHES (Int.Cl.6) H04N G06T |
| A | US 5 432 893 A (BLASUBRAMANIAN T. ET AL) 11 juillet 1995 * colonne 9, ligne 9 - colonne 11, ligne 2 * * colonne 12, ligne 12 - colonne 24, ligne 69 * ----- | 1 | |

Le présent rapport a été établi pour toutes les revendications

| Lieu de la recherche | Date d'achèvement de la recherche | Examinateur |
|---|---|---|
| LA HAYE | 10 septembre 1998 | Verschelden, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................
& : membre de la même famille, document correspondant

EPO FORM 1503 03.82 (P04C02)